# EUROPÄISCHE PATENTSCHRIFT

(11) **EP 1 830 381 B1**
(45) Veröffentlichungstag und Bekanntmachung des Hinweises auf die Patenterteilung: **03.02.2010**
(21) Anmeldenummer: 07004116.5
(22) Anmeldetag: 28.02.2007
(51) Int. Cl.: H01J 35/10, B22F 1/00, C08J 5/00

(54) **Verfahren zur Herstellung eines Kühlkörpers sowie Kühlkörper**
Method for manufacturing a cooling unit and cooling unit
Procédé destiné à la fabrication d'un élément de refroidissement, tout comme élément de refroidissement

(30) Priorität: 02.03.2006 DE 102006010232
(43) Veröffentlichungstag der Anmeldung: 05.09.2007
(73) Patentinhaber: Schunk Kohlenstofftechnik GmbH, 35452 Heuchelheim (DE)
(72) Erfinder: Weiss, Roland, Dr., 35625 Hüttenberg (DE); Scheibel, Thorsten, 61231 Bad Nauheim (DE); Henrich, Martin, Dr., 35582 Wetzlar (DE); Ebert, Marco, 35083 Wetter (DE); Lauer, Andreas, 35274 Kirchhain (DE)
(74) Vertreter: Stoffregen, Hans-Herbert

(56) Entgegenhaltungen:
- WO-A-2005/109553
- DE-B3-102005 034 687
- JP-A- 2005 097 046
- JP-A- 2005 179 729
- US-A1- 2003 091 825
- US-A1- 2005 116 336

## Beschreibung

Die Erfindung bezieht sich auf ein Verfahren zur Herstellung eines Drehanodenkühlkörpers hoher Wärmeleitfähigkeit aus Kohlenstofimaterial, der wärmeleitend mit einem Brennring verbunden wird und mit diesem einen um eine Drehachse drehbaren Anodenkörper einer Röntgenröhre bildet, wobei der Brennring quer zur Drehachse verläuft,

Auch nimmt die Erfindung Bezug auf eine Drehanode einer Röntgenröhre mit einem Drehanodenkühlkörper hoher Wärmeleitfähigkeit aus Kohlenstoffmaterial, der um eine Drehachse drehbar ist und mit einem quer bzw. senkrecht zur Drehachse verlaufenden Brennring wärmeleitend verbunden ist.

Eine Drehanode mit einem Kühlkörper ist der DE-B-103 04 936 zu entnehmen. Um die auf den Brennring, also auf der Targetoberfläche auftretenden hohen Temperaturen gut abzuleiten, weist der Kühlkörper eine kelchftörmige Geometrie auf, um die innerhalb des Kühlkörpers verlaufenden Kohlenstofffasern hoher Wärmeleitfähigkeit stumpf sowohl an der Targetunterseite als auch an einem koaxial zur Drehachse verlaufenden Kühlrohr enden zu lassen, das von einem Kühlmittel durchströmt ist.

Die US-A-5,943,389 bezieht sich auf eine Drehanode, bei der eine wärmeleitende Verbindung über einen C-Verbundkörper erfolgt, indem parallel zueinander verlaufende Kohlenstofffasern über eine Kohlenstoffmatrix verbunden sind. Die Wärmeleitfähigkeit der Kohlenstofffasern kann im Bereich zwischen 400 W/mK - 1000 W/mK liegen.

Eine aus Prepregs bestehende Drehanode mit Kohlenstofffasern wird in der JP-A-61-022546 beschrieben.

Ein Kühlkörper für insbesondere elektronische Bauteile wie gedruckte Schaltungen oder Halbleiterschichten ist aus der WO-A-2005/028549 bekannt. Der Kühlkörper weist einen Verbundkörper mit Nanoröhren auf, wobei das Basismaterial Metall ist.

Auch sind z. B. zum Kühlen elektrischer Schaltung bestimmte Kühlkörper bekannt, die aus einem Keramikverbundkörper bestehen, die Kohlenstoffnanoröhren enthalten. Insoweit ist auf die US-A-2005/0116336 oder die US-A-2007/0145335 (JP-A-2005-097046) zu verweisen. Zur Wärmeableitung bestimmter Sinterkörper nach der JP-A-2005-179729 weist eine Metall enthaltende Matrix und Kohlenstofffasern auf.

Zur Abfuhr der Wärme bei Drehanoden haben sich Faserverbundwerkstoffe bewährt, da diese gegenüber den üblicherweise zum Einsatz gelangenden Metallkörpern leichter sind, so dass die Drehanoden mit hoher Frequenz rotieren und dadurch größere Durchmesser aufweisen können. In der Praxis hat sich jedoch gezeigt, dass die Wärmeableitung den Anforderungen hoch entwickelter Röntgenröhren, insbesondere CT-Geräten nicht hinreichend genügt. So tritt eine Aufheizung auf, die eine häufige Unterbrechung des Betriebs verlangt. Ferner ist von Nachteil, dass die aus Kohlenstoffverbundwerkstoff bestehenden Drehanoden ein von einem Kühlmedium durchströmtes Kühlrohr umfassen, so dass der konstruktive Aufbau aufwändig ist.

Der vorliegenden Erfindung liegt die Aufgabe zugrunde, ein Verfahren zur Herstellung eines Kühlkörpers und einen solchen selbst derart weiterzubilden, dass im Vergleich zu Kühlkörpern bekannter Bauart hohe Wärmeleitfähigkeiten erreichbar sind, so dass eine bessere Wärmeableitung erfolgt. Auch sollen die Kühlkörper einfach aufgebaut sein, ohne dass insbesondere besondere Kühlkanäle erforderlich sein müssen, die von einem Kühlfluid durchströmt werden.

Erfindungsgemäß wird die Aufgabe verfahrensmäßig im Wesentlichen dadurch gelöst, dass zur Bildung des Kühlkörpers eine Mischung aus Kohlenstoffnanoröhren und einem Bindemittel geformt und anschließend wärmebehandelt wird.

Abweichend vom vorbekannten Stand der Technik werden Nanoröhren - auch Nanotubes oder Nanofasern genannt - aus Kohlenstoff mit einem Bindemittel gemischt, um sodann z. B. durch isostatisches, halbisostatisches oder axiales Pressen oder durch Spritzgießen einen Formkörper herzustellen, der anschließend wärmebehandelt wird. Das Wärmebehandeln kann dabei Härten, Pyrolysieren bzw. Karbonisieren und Graphitisierungsglühen umfassen. Auch ein Harz-Injektions-Verfahren (resin transfer molding (RTM)) kann zum Einsatz gelangen. Ein- oder mehrmaliges Nachverdichten mittels CVI (Chemical Vapor Infiltration) kann erfolgen.

Es sind alle Verfahren anwendbar, die bei der Herstellung von C/C-Formkörpern zum Einsatz gelangen.

Erfolgt ein isostatisches Pressen, so sollten Drücke im Bereich zwischen 1000 bar und 2000 bar, vorzugsweise im Bereich von 2000 bar zur Anwendung gelangen. Gleiches gilt bei Herstellung durch halbisostatisches Pressen. Wird ein axiales Pressen durchgeführt, so liegt der Druck zwischen 500 bar bis 700 bar, vorzugsweise im Bereich von 700 bar.

Erfindungsgemäß wird ein Kühlkörper, insbesondere Drehanodenkühlkörper, auf organischer Basis zur Verfügung gestellt, der als Keramikkörper ausgebildet ist, der Kohlenstoffnanoröhren enthält, die für eine hohe Wärmeableitung sorgen.

Als Nanoröhren (Nanotubes) können ein- und/oder mehrwandige mit und/oder ohne offenen Enden und/oder mit und/oder ohne Hohlraum verwendet werden. Insbesondere ist jedoch vorgesehen, dass Nanotubes mit im Wesentlichen Durchmesser im Bereich zwischen 10 nm und 150 nm, also so genannte mehrwandige Nanotubes zum Einsatz gelangen. Die Länge der entsprechenden verwendeten Fasern kann im Bereich bis zu 50 µm liegen, ohne dass hierdurch die Erfindung eingeschränkt wird.

Insbesondere wird ein Gemisch aus entsprechenden Nanoröhren mit einem Harz hergestellt, wobei der Volumenanteil der Kohlenstoffnanoröhren zwischen 20 Vol.-% und 70 Vol.-%, bevorzugter Weise zwischen 50 Vol.-% und 65 Vol.-% liegt. Der Mischung kann dabei ein Füllstoff beigegeben werden, wie z.B. gut leitender Graphit oder Ruß. Auch können der Mischung in gewünschtem Umfang Kohlenstoffnanotubes mit Durchmessern von < 1,0 nm, insbesondere < 2,5 nm beigegeben werden.

Durch die Verwendung von Nanotubes ergibt sich ein Formkörper hoher Wärmeleitfähigkeit, wobei die Wärmeleitfähigkeit 600 W/mK oder mehr beträgt.

Dabei werden bevorzugter Weise mehrwandige Nanotubes im Durchmesserbereich zwischen 100 nm und 150 nm, so genannte Vapor Grown Carbon Fibers, verwendet, um eine extrem hohe Oberfläche zu vermeiden, die bei Nanotubes geringerer Durchmesser vorliegen. Je höher die Oberfläche der Nanotubes jedoch ist, um so mehr besteht das Risiko, dass die Oberflächen mit Materialien belegt werden, die eine nicht so gute Leitfähigkeit mit der Folge zeigen, dass die Wärmeleitfähigkeit des Formkörpers insgesamt unerwünscht abnimmt.

Bezüglich der Wärmebehandlung ist darauf hinzuweisen, dass zum Nachverdichten insbesondere ein Gasphasenimprägnieren im CVI-Verfahren mit Pyrokohlenstoff (PyC) durchgeführt wird. Andere geeignete Imprägniermittel sind gleichfalls möglich, sofern sich diese in Kohlenstoff umwandeln.

Wärmebehandlungsschritte wie Karbonisieren und Graphitisieren sollten im Temperaturbereich zwischen 700 °C und 1200 °C bzw. 2400 °C und 3500 °C erfolgen, wobei das Karbonisieren bevorzugter Weise zwischen 900 °C und 1150 °C und das Graphitisieren zwischen 2600 °C und 3300 °C erfolgt.

Damit der Formkörper eine hinreichende Stabilität aufweist, ist in einer Weiterbildung verfahrensmäßig vorgesehen, dass der wärmebehandelte Kühlkörper nach gegebenenfalls erforderlicher Nachbearbeitung innen- und/oder außenseitig armiert wird. Dabei kann als Armierung ein Stützring insbesondere aus kohlenstofffaserverstärktem Kohlenstoff (CFC) verwendet werden.

Eine Drehanode einer Röntgenröhre der eingangs genannten Art zeichnet sich dadurch aus dass der Kühlkörper(14) ein aus einer Kohlenstoffnanoröhren und Harzenthaltenden Mischung geformter und wärmebehandelter Formkörper ist. Bei den Kohlenstoffnanoröhren handelt es sich insbesondere um ein- oder mehrwandige mit und/oder offenen Enden und/oder mit und/oder ohne Hohlraum. Der Volumenanteil V der Nanoröhren in dem Formkörper beläuft sich auf 20 Vol.-% bis 70 Vol.-%, insbesondere im Bereich zwischen 50 Vol.-% und 65 Vol.-%.

Ferner kann der Formkörper einen wärmeleitenden Füllstoff wie Graphit oder Ruß enthalten.

Bevorzugter Weise handelt es sich bei den Nanoröhren um solche mit einem Durchmesser im Mittel zwischen 100 nm und 150 nm, die zudem einen Hohlraum nicht aufweisen. Zur Erhöhung der Wärmeleitfähigkeit können Nanoröhren kleinerer Durchmesser beigegeben werden.

Unabhängig hiervon kann der Bereich der Durchmesser der in dem Formkörper vorhandenen Nanoröhren bis zu 500 Nanometer betragen, ohne dass die Erfindung verlassen wird.

Eine bimodale Mischung von Nanoröhren ist gleichfalls möglich, also Mischungen von ersten und zweiten Nanoröhren, wobei die ersten Nanoröhren im Mittel einen Durchmesser aufweisen, der deutlich von dem Durchmesser abweicht, den die zweiten Nanoröhren im Mittel aufweisen.

Des Weiteren sieht die Erfindung vor, dass der Formkörper als Ringscheibe ausgebildet ist, die innen- und/oder außenseitig von einem aus Kohlenstofffasermaterial bestehenden Stützring begrenzt sein kann.

Auch andere Geometrien sind denkbar, ohne dass hierdurch die Erfindung eingeschränkt wird.

Der Formkörper kann durch isostatisches, halbisostatisches oder axiales Pressen hergestellt sein. Es besteht auch die Möglichkeit, den Formkörper als Spritzgussteil auszubilden.

Der Formkörper kann aber auch durch mechanische Bearbeitung aus einem Rohling im Grünstadium oder als Kohlenstoffwerkstoff hergestellt werden.

Ein Rohling im Grünstadium kann wie folgt hergestellt werden. Eine compoundierte Mischung aus Kohlenstoffnanoröhren, Bindemittel und Füllstoffen wird mittels Warmpressverfahren bei einer Temperatur von ca. 150°C mit ca. 700 bar in einem beheizbaren Gesenk endkonturnah verdichtet.

Das axiale Pressen kann ebenfalls in einem auf ca. 150 °C vorgeheizten Gesenk erfolgen, wobei eine Haltezeitdauer von ca. 30 min bevorzugt wird. Die Mischung selbst wird in das Gesenk dann eingegeben, wenn das Gesenk die gewünschte Temperatur aufweist.

Bei der Herstellung eines Grünlings durch axiales Pressverfahren besteht die Möglichkeit, die compoundierte Mischung auch in ein kaltes Gesenk einzubringen und sodann eine Verdichtung unter einem definierten Temperatur/Druck/Zeitzyklus durchzuführen, um den Grünkörper herzustellen.

Beim isostatischen Pressen wird ein kaltisostatisches Verfahren gewählt, wobei ringförmige Drehanodenkühlkörper vorzugsweise in Form eines zylindrischen Rohres (semi isostatisch) hergestellt werden, um den Bearbeitungsaufwand zu minimieren. Der halbisostatisch gepresste Körper wird anschließend einem Temperatur/Zeitzyklus unterworfen bis zur Endhärtung.

Unter Kohlenstoffwerkstoff ist Folgendes zu verstehen. Das Compound mit Kohlenstoffnanoröhren besitzt eine vergleichbare Konsistenz wie Pulver und kann deshalb analog den Standardherstellungsverfahren von Kohlenstoffwerkstoffen verpresst, gehärtet, carbonisiert und graphitiert werden, so dass ein Kohlenstoffwerkstoff entsteht. Die Herstelltechnik ermöglicht verschiedene Geometrien, die anschließend zu einer Drehanode verarbeitet werden können.

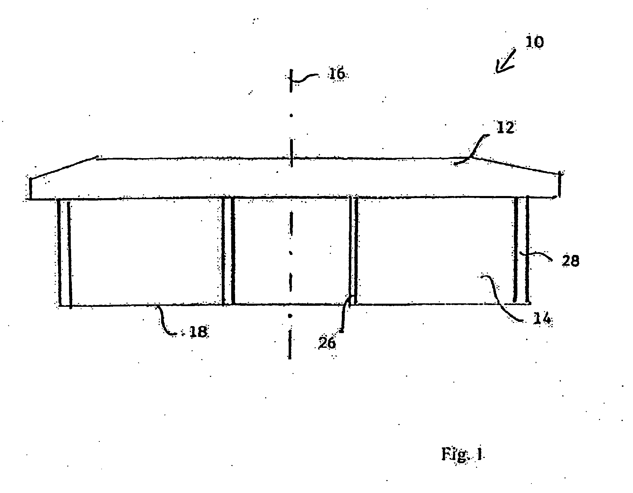

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden Ausführungsbeispiels.

In der einzigen Fig. ist rein prinzipiell eine Drehanode 10 insbesondere bestimmt für einen Computertomographen dargestellt. Die Drehanode 10 setzt sich im Ausführungsbeispiel aus einem Brennring 12 und einem Kühlkörper 14 zusammen. Der Brennring 12 kann z.B. aus Wolfram bestehen. Die Drehanode 10 ist auf einer nicht dargestellten Welle gelagert und um eine Achse 16 drehbar.

Um eine hohe Messpunktdichte in kurzer Zeit zu erzielen, kann die Drehanode 10 anwendungsbezogen mit Frequenzen von 150 Hz und höher wie 400 Hz gedreht werden. Der Durchmesser kann im Bereich zwischen 150 und 250 mm liegen, ohne dass dies als Einschränkung auszulegen ist.

Um die Wärme von dem Brennring 12 gut ableiten zu können, wodurch sichergestellt wird, dass die Drehanode 10 über einen langen Zeitraum ohne Unterbrechung eingesetzt werden kann, ist der Kühlkörper 14 ein aus einer Mischung aus Kohlenstoffnanoröhren und einem Harz hergestellter Formkörper. Als Kohlenstoffnanoröhren werden dabei insbesondere so genannte Vapor Grown Carbon Fibers benutzt, die einen Durchmesser zwischen 100 nm und 150 nm aufweisen und einen Hohlraum nicht besitzen. Der Volumenanteil der Kohlenstoffnanoröhren in der Drehanode beläuft sich im Bereich zwischen 20 Vol.-% bis 70 Vol.-%, bevorzugter Weise zwischen 50 Vol.-% und 65 Vol.-%.

Um die Wärmeleitfähigkeit zu erhöhen, können in der Ausgangsmischung zur Herstellung der Drehanode 10 auch Nanoröhren oder Nanotubes geringerer Durchmesser, insbesondere einwandige hinzugegeben sein. Auch gut wärmeleitende Additive wie Pech oder Ruß können beigemischt werden.

Ein entsprechender Kühlkörper 14 weist eine Wärmeleitfähigkeit von mehr als 600 W/mK auf, so dass eine gute Wärmeableitung von dem Brennring 12 erfolgen kann.

Um eine hinreichende Stabilität zu erreichen, kann der Kühlkörper 14 innenseitig, also drehachsenseitig, einen Stützring 26 aufweisen, der aus hochfestem CFC besteht. Auch außenseitig kann ein entsprechender Stützring 28 vorgesehen sein, der auf dem Kühlkörper 14 aufgepresst ist. Andere Befestigungsarten sind gleichfalls möglich.

### Ausführungsbeispiel 1:

Zur Herstellung eines entsprechenden Kühlkörpers 14 wird zuerst eine Mischung aus den Nanoröhren und dem Bindemittel hergestellt, das ein Duromer ist. Bevorzugter Weise werden als Bindemittel Harze wie Phenolharze verwendet. Andere Polymere, auch Thermoplaste sind gleichfalls möglich. Der Anteil der Köhlenstofinanoröhren sollte sich im Bereich von 50 Vol.-% bis 65 Vol.-% belaufen. Aus der entsprechenden Mischung kann entweder durch Spritzgießen oder durch isostatisches, halbisostatisches oder axiales Pressen ein Formkörper hergestellt werden, der der Endform der Drehanode 10 nahe kommt. Dieser Formkörper wird analog zur C/C-Herstellung carbonisiert und graphitisiert. Sodann erfolgt ein Imprägnieren mit Kohlenstoff oder einem durch Karbonisieren in Kohlenstoff umwandelndes Material. Die imprägnierte Form wird sodann wärmebehandelt, wobei ein ein- oder mehrfaches Nachverdichten des wärmebehandelten Formkörpers erfolgen kann. Die Nachverdichtung kann mittels CVI erfolgen. Auch eine Druckverdichtung ist möglich.

Die Wärmebehandlung schließt die Schritte Karbonisieren und Graphitieren ein, wobei das Karbonisieren im Bereich zwischen 700 °C und 1200 °C, insbesondere zwischen 900 °C und 1150 °C, und das Graphitieren zwischen 2400 °C und 3500 °C, insbesondere im Bereich zwischen 2600 °C und 3300 °C erfolgt (die Verfahrensfolge kann eine ein- oder mehrfache Nachverdichtung einschließen).

Anschließend wird der Formkörper zur Endform bearbeitet, und zwar durch spanendes Bearbeiten. Schließlich kann auf dem bearbeiteten Körper eine Stützstruktur in Form des inneren und/oder äußeren CFC-Rings 26, 28 aufgebracht werden.

### Ausführungsbeispiel 2:

Zur Herstellung eines Kühlkörpers wird ein Compound aus Kohlenstoffnanoröhren oder Vapor Grown Carbon Fibers mit Phenolharz als Bindemittel in ein vorgewärmtes Gesenk von z. B. 150 °C eingefüllt und unter 700 bar Pressdruck axial zu einem Ring mit den Abmessungen Außendurchmesser 205 mm und Innendurchmesser 138 mm mit einer Höhe von 70 mm bei einer Haltezeit von ca. 30 min verpresst. Anschließend wird das Pressteil aus dem Gesenk entnommen und nach Entfernen der Presshaut carbonisiert, graphitiert und danach einem dreifachen Imprägnieren/Recarbonisierungszyklus unterworfen. Sodann erfolgt die Endgraphitisierung bei Temperaturen größer 2800 °C und eine Endbearbeitung. Nach der Endbearbeitung wird der Kühlkörper mittels CVD mit PyC beschichtet, um ein Partikelrelease während der Anwendung zu vermeiden. Der Kühlkörper kann mit einem CFC-Haltering ausgestattet werden, sofern dies durch die gewünschte Drehzahl der Röntgendrehanode erforderlich ist. Die Befestigung auf dem Drehteller und die Aufbringung des Brennrings erfolgt mit bekannter Technik insbesondere durch Lötprozesse.

## Patentansprüche

1. Verfahren zur Herstellung eines Drehanodenkühlkörpers hoher Wärmeleitfähigkeit aus Kohlenstoffmaterial, der wärmeleitend mit einem Brennring verbunden wird und mit diesem einen um eine Drehachse drehbaren Anodenkörper einer Röntgenröhre bildet, wobei der Brennring quer zur Drehachse verläuft,
**dadurch gekennzeichnet,**
**dass** zur Bildung des Kühlkörpers eine Mischung aus KoMenstofnanoröhren und einem Bindemittel geformt und anschließend wärmebehandelt wird.

2. Verfahren nach Anspruch 1,
**dadurch gekennzeichnet,**
**dass** als Nanoröhren ein- und/oder mehrwandige mit und/oder ohne offenen Enden und/oder mit und/oder ohne Hohlraum verwendet werden, wobei insbesondere der Volumenanteil V der Nanoröhren in der Mischung 20 Vol-% ≤ V ≤ 70 Vol-% insbesondere 50 Vol-% ≤ V ≤ 65 Vol-% beträgt.

3. Verfahren nach zumindest Anspruch 1,
**dadurch gekennzeichnet,**
**dass** der Mischung ein wärmeleitender Füllstoff wie Graphit oder Ruß beigemischt wird, wobei insbesondere der Volumenanteil VF des wärmeleitenden Füllstoffs 0 Vol.-% ≤ VF ≤ 40 Vol.-%, insbesondere 0 Vol.-% ≤ VF ≤ 10 Vol.-% beträgt.

4. Verfahren nach Anspruch 1,
**dadurch gekennzeichnet,**
**dass** zur Formgebung der Mischung diese isostatisch, halbisostatisch oder axial gepresst wird.

5. Verfahren nach Anspruch 1,
**dadurch gekennzeichnet,**
**dass** der Kühlkörper durch Spritzgießen geformt wird.

6. Verfahren nach Anspruch 1,
**dadurch gekennzeichnet,**
**dass** die geformte Mischung gehärtet, pyrolysiert und graphitisiert wird, wobei vorzugsweise die geformte Mischung insbesondere im CVI-Verfahren ein- oder mehrmals nachverdichtet wird.

7. Verfahren nach Anspruch 1,
**dadurch gekennzeichnet,**
**dass** als Nanoröhren solche mit einem Durchmesser D verwendet werden mit im Wesentlichen 100 nm ≤ D ≤ 150 nm, wobei bevorzugterweise als Nanoröhren Vapor Grown Carbon Fibers verwendet werden.

8. Verfahren nach Anspruch 1,
**dadurch gekennzeichnet,**
**dass** als Nanoröhren solche mit einem Durchmesser D mit D ≤ 500 nm und/oder als die Kohlenstoffnanoröhren solche mit einer Länge L mit im Wesentlichen L ≤ 150 µm verwendet werden.

9. Verfahren nach Anspruch 1,
**dadurch gekennzeichnet,**
**dass** die Mischung eine bimodale Mischung aus Nanoröhren mit deutlich sich unterscheidenden Durchmessern ist.

10. Verfahren nach Anspruch 1,
**dadurch gekennzeichnet,**
**dass** der aus der Mischung geformte und wärmebehandelte Kühlkörper nach gegebenenfalls erforderlicher Nachbearbeitung innen- und/oder außenseitig armiert wird, wobei insbesondere als Armierung ein Stützring insbesondere aus Kohlenstofffaserwerkstoff (CFC) verwendet wird.

11. Drehanode (10) einer Röntgenröhre mit einem Drehanodenkühlkörper (14) hoher Wärmeleitfähigkeit aus Kohlenstofimaterial, der um eine Drehachse drehbar ist und mit einem quer bzw. senkrecht zur Drehachse verlaufenden Brennring (12) wärmeleitend verbunden ist,
**dadurch gekennzeichnet,**
**dass** der Kühlkörper (14) ein aus einer Kohlenstoffnnanoröhren und Harz enthaltenden Mischung geformter und wärmebehandelter Formkörper ist.

12. Drehanode nach Anspruch 11,
**dadurch gekennzeichnet,**
**dass** die Kohlenstoffnanoröhren in einer Kohlenstoffmatrix eingelagert sind, wobei der Volumenanteil V der Kohlenstoffnanoröhren 20 Vol.-% ≤ V ≤ 70 Vol.-%, insbesondere 50 Vol.% ≤ V ≤ 65 Vol-% beträgt.

13. Drehanode nach Anspruch 11,
**dadurch gekennzeichnet,**
**dass** die Kohlenstoffnanoröhren im Wesentlichen einen Durchmesser D mit 100 nm ≤ D ≤ 150 nm und/oder eine Länge L mit im Wesentlichen L ≤ 150 µm auf weisen.

14. Drehanode nach Anspruch 11,
**dadurch gekennzeichnet,**
**dass** die Kohlenstofffasemanoröhren Vapor Grown Carbon Fibers sind.

15. Drehanode nach Anspruch 11,
**dadurch gekennzeichnet,**
**dass** der Kühlkörper (14) innen- und außenseitig einen Stützring (26, 28) aufweist, wobei insbesondere der Stützring (26, 28) aus Kohlenfaserwerkstoff (CFC) besteht.

## Claims

1. Method for manufacturing a rotatable anode heat sink exhibiting high heat conductivity and being made of carbon material, said rotatable anode heat sink is heat conductively connected to a focal ring and forms with the latter an anode body of an X-ray tube rotatable about a rotational axis, with the focal ring running across the rotational axis,
**characterized in**
**that** for the formation of the heat sink a mixture of carbon fiber nanotubes and a binder is molded and subsequently subjected to heat treatment.

2. Method according to Claim 1,
**characterized in**
**that** as nanotubes are used those being single and/or multi-walled with and/or without open ends and/or with and/or without hollow spaces, whereby especially the volume portion V of the nanotubes in the mixture is 20 vol.% ≤ V ≤ 70 vol.%, in particular 50 vol.% ≤V ≤ 65 vol.%.

3. Method according to at least Claim 1,
**characterized in**
**that** a heat-conductive filler such as graphite or carbon black is added to the mixture, whereby especially the volume portion VF of the heat conducting filler is 0 vol.% ≤ VF ≤ 40 vol.%, in particular 0 vol.% ≤ VF ≤ 10 vol.%.

4. Method according to Claim 1,
**characterized in**
**that** for molding the mixture, it is pressed isostaticly, semi-isostaticly or axially.

5. Method according to Claim 1,
**characterized in**
**that** the heat sink is molded through injection molding.

6. Method according to Claim 1,
**characterized in**
**that** the molded mixture is hardened, pyrolyzed and graphitized, whereby preferably the molded mixture is re-densified once or repeatedly in particular in the CVI-process.

7. Method according to Claim 1,
**characterized in**
**that** as nanotubes are used those with a diameter D of essentially 100 nm ≤ D < 150 nm are used, whereby especially vapor grown carbon fibers are used as nanotubes.

8. Method according to Claim 1,
**characterized in**
**that** as nanotubes are used those with a diameter D of D ≤500 nm and/or as the carbon nanotubes are used those with a length L of essentially L ≤150 µm.

9. Method according to Claim 1,
**characterized in**
**that** the mixture is a bimodal mixture of nanotubes of clearly different diameters.

10. Method according to Claim 1,
**characterized in**
**that** the heat sink molded from the mixture and subjected to heat treatment is reinforced internally and/or externally following any necessary post-processing, whereby especially a bearing ring, particularly one of carbon fiber material (CFC) is used as reinforcement.

11. Rotatable anode (10) of an X-ray tube with an rotatable anode body (14) exhibiting high heat conductivity and being made of carbon material, said rotatable anode body being rotatable about a rotational axis and being heat conductively connected to a focal ring (12) that runs across, respectively perpendicularly to the rotational axis,
**characterized in**
**that** the heat sink (14) is a molded body that is formed of a mixture containing carbon nanotubes and resin and is heat treated.

12. Rotatable anode according to claim 11,
**characterized in**
**that** the carbon nanotubes are embedded in a carbon matrix, with the volume portion V of the carbon nanotubes being 20 vol.% ≤V ≤70 vol.%, in particular 50 vol.% ≤V ≤65 vol.%.

13. Rotatable anode according to claim 11,
**characterized in**
**that** the carbon nanotubes essentially have a diameter D of 100 nm ≤ D ≤150 nm and/or a length L of essentially L ≤150 µm.

14. Rotatable anode according to claim 11,
**characterized in**
**that** the carbon fiber nanotubes are vapor grown carbon fibers.

15. Rotatable anode according to claim 11,
**characterized in**
**that** the heat sink (14) exhibits a bearing ring (26, 28) both internally and externally, whereby especially the bearing ring (26, 28) is made of carbon fiber material (CFC).

## Revendications

1. Procédé de fabrication d'un élément de refroidissement d'anode tournante à haute conductibilité thermique fait d'un matériau en carbone, qui est relié de manière thermoconductrice à un anneau-cible et forme avec celui-ci un corps d'anode d'un tube à rayons X, et pivote autour d'un axe de rotation, l'anneau-cible s'étendant transversalement à l'axe de rotation,
**caractérisé en ce**
pour réaliser l'élément de refroidissement est formé un mélange de nanotubes de carbone et d'un liant, qui est ensuite traité thermiquement.

2. Procédé selon la revendication 1,
**caractérisé en ce**
**que** sont utilisés des nanotubes monofeuillets et/ou multifeuillets avec et/ou sans extrémités ouvertes et/ou avec et/ou sans cavité, sachant qu'en particulier la part en volume V des nanotubes dans le mélange est telle que 20 % ≤ V ≤ 70 %, notamment 50 % ≤ V ≤ 65 %.

3. Procédé selon au moins la revendication 1,
**caractérisé en ce**
**qu'**au mélange est ajoutée une matière de remplissage thermoconductrice telle que du graphite ou noir de carbone, sachant qu'en particulier la part en volume VF de la matière de remplissage thermoconductrice est telle que 0 % ≤ VF ≤ 40 %, notamment 0 % ≤ VF ≤ 10 %.

4. Procédé selon la revendication 1,
**caractérisé en ce**
**que** le mélange est façonné par compression isostatique, semi-isostatique ou axiale.

5. Procédé selon la revendication 1,
**caractérisé en ce**
**que** l'élément de refroidissement est façonné par moulage par injection.

6. Procédé selon la revendication 1,
**caractérisé en ce**
**que** le mélange façonné est durci, pyrolysé et graphitisé, sachant que de préférence le mélange façonné est en particulier recompressé une ou plusieurs fois dans le procédé CVI (infiltration chimique en phase vapeur).

7. Procédé selon la revendication 1,
**caractérisé en ce**
**que** sont utilisés des nanotubes présentant un diamètre D tel que pour l'essentiel 100 nm ≤ D ≤ 150 nm, sachant que de préférence des fibres de carbone obtenues par dépôt chimique en phase vapeur (Vapor Grown Carbon Fibers) sont utilisées comme nanotubes.

8. Procédé selon la revendication 1,
**caractérisé en ce**
**que** sont utilisés des nanotubes présentant un diamètre D tel que D ≤ 500 nm et/ou des nanotubes de carbone présentant une longueur L telle que pour l'essentiel L ≤ 150 µm.

9. Procédé selon la revendication 1,
**caractérisé en ce**
**que** le mélange est un mélange bimodal constitué de nanotubes présentant des diamètres nettement différents les uns des autres.

10. Procédé selon la revendication 1,
**caractérisé en ce**
**que** l'élément de refroidissement façonné à partir du mélange et traité thermiquement est armé intérieurement et/ou extérieurement après une retouche éventuellement nécessaire, sachant qu'en particulier est utilisé comme armature une bague d'appui notamment constituée d'un matériau en carbone renforcé aux fibres de carbone (CFC).

11. Anode tournante (10) d'un tube à rayons X, avec un élément de refroidissement d'anode tournante (14) à haute conductibilité thermique qui est fait d'un matériau en carbone et pivote autour d'un axe de rotation et est relié de manière thermoconductrice à un anneau-cible (12) s'étendant transversalement ou perpendiculairement à l'axe de rotation,
**caractérisée en ce**
**que** l'élément de refroidissement (14) est un élément moulé et traité thermiquement façonné à partir d'un mélange contenant des nanotubes de carbone et de la résine.

12. Anode tournante selon la revendication 11,
**caractérisée en ce**
**que** les nanotubes de carbone sont inclus dans une matrice de carbone, sachant que la part en volume V des nanotubes de carbone est telle que 20 % ≤ V ≤ 70 %, notamment 50 % ≤ V ≤ 65 %.

13. Anode tournante selon la revendication 11,
**caractérisée en ce**
**que** les nanotubes de carbone présentent un diamètre D pour l'essentiel tel que 100 nm ≤ D ≤ 150 nm et/ou une longueur L pour l'essentiel telle que L ≤ 150 µm.

14. Anode tournante selon la revendication 11,
**caractérisée en ce**
**que** les nanotubes sont en fibres de carbone obtenues par dépôt chimique en phase vapeur (Vapor Grown Carbon Fibers).

15. Anode tournante selon la revendication 11,
**caractérisée en ce**
**que** l'élément de refroidissement (14) présente intérieurement et extérieurement une bague d'appui (26, 28), sachant qu'en particulier la bague d'appui (26, 28) est constituée d'un matériau en carbone renforcé aux fibres de carbone (CFC).
